**Europäisches Patentamt**

**European Patent Office**

**Office européen des brevets**

(19)

(11) Publication number : **0 323 810 B1**

(12)

# EUROPEAN PATENT SPECIFICATION

(45) Date of publication of patent specification :
**05.08.92 Bulletin 92/32**

(51) Int. Cl.⁵ : **A47G 19/12, A47J 45/07**

(21) Application number : **88830449.0**

(22) Date of filing : **26.10.88**

(54) Improved structure for improving the handling characteristics of coffee-pots, tea-pots and the like.

(30) Priority : **31.12.87 IT 2329787**

(43) Date of publication of application :
**12.07.89 Bulletin 89/28**

(45) Publication of the grant of the patent :
**05.08.92 Bulletin 92/32**

(84) Designated Contracting States :
**BE CH DE ES FR GB LI NL SE**

(56) References cited :
**DE-A- 1 632 065**
**DE-A- 3 406 918**
**DE-U- 8 203 265**
**FR-A- 880 219**
**US-A- 4 548 349**

(73) Proprietor : **VEV INOX S.R.L.**
**Via Casati, 13**
**I-20045 Besana Brianza Milano (IT)**

(72) Inventor : **Vigano, Eugenio**
**VEV INOX S.r.l. Via Casati, 13**
**I-20045 Besana Brianza (Milano) (IT)**

(74) Representative : **Cicogna, Franco**
**Ufficio Internazionale Brevetti Dott.Prof.**
**Franco Cicogna Via Visconti di Modrone, 14/A**
**I-20122 Milano (IT)**

## Description

The present invention relates to an improved structure for improving the handling characteristics of coffee-pots, tea-pots and the like.

As is known, conventional coffee-pots, tea-pots and the like consist of a containing or holding body, of any suitable shape, thereto a handle element is applied, outwardly radially extending and projecting from a base.

This handle element is preferably coated by a thermally insulating plastics material so as to provide an easily engageable gripping region even as the coffee-pot is put on a flame.

These known coffee-pots and tea-pots, however, have the drawback that they can not be easily handled, since the vessel weight is practically supported cantilever-wise and, accordingly, represents an obstacle for the user during the contents pouring step.

Another drawback is that the handle element is heated as the coffee or tea is prepared and frequently reaches such a temperature which can be dangerous for the user.

Moreover, as the handle element is coated by a thermally insulating plastics material, or is completely made of a thermally insulating plastics material, the continued heatings during the continued uses causes said plastics material to be deformed and damaged.

Document DE-A-3406 918 discloses a coffee-pot according to the prior art forming the basis for the preamble of claim 1.

## SUMMARY OF THE INVENTION

Accordingly, the task of the present invent,ion is to overcome the above mentioned drawbacks, by providing an improved coffee-pot, tea-pot structure which includes a handle element so shaped as not to project from the vessel body.

Within the scope of the above task, a main object of the invention is to provide such an improved coffee-pot, tea-pot and the like structure which includes a handle element not directly affected by the use heat and which, accordingly, does not reach any dangerous temperatures.

Another object of the present invention is to provide such a coffee-pot, tea-pot structure the weight of which is distributed in a very balanced way with respect to the gripping zone of the handle.

Yet another object of the present invention is to provide such an improved coffee-pot, tea-pot structure which is very reliable in operation.

According to one aspect of the present invention, the above mentioned task and objects, as well as yet other objects, which will become more apparent hereinafter, are achieved by an improved coffee-pot, tea-pot and the like structure having the features of the characteristing part of the main claim.

Addition features of the invention are described in claims 2-6

## BRIEF DESCRIPTION OF THE DRAWINGS

Further characteristics and advantages of the invention will become more apparent hereinafter from the following detailed description of a preferred, though not exclusive,embodiment of an improved coffee-pot, tea-pot and the like structure, which is illustrated, by way of an indicative but not limitative example, in the accompanying drawings, where:

Figure 1 is a schematic perspective view illustrating a coffee-pot, tea-pot, milk-pot improved according to the present invention;

Figure 2 is an exploded perspective view illustrating a coffee-pot having its handle element removed from the vessel body; and

Figure 3 is a cross-sectional view of the improved coffee-pot.

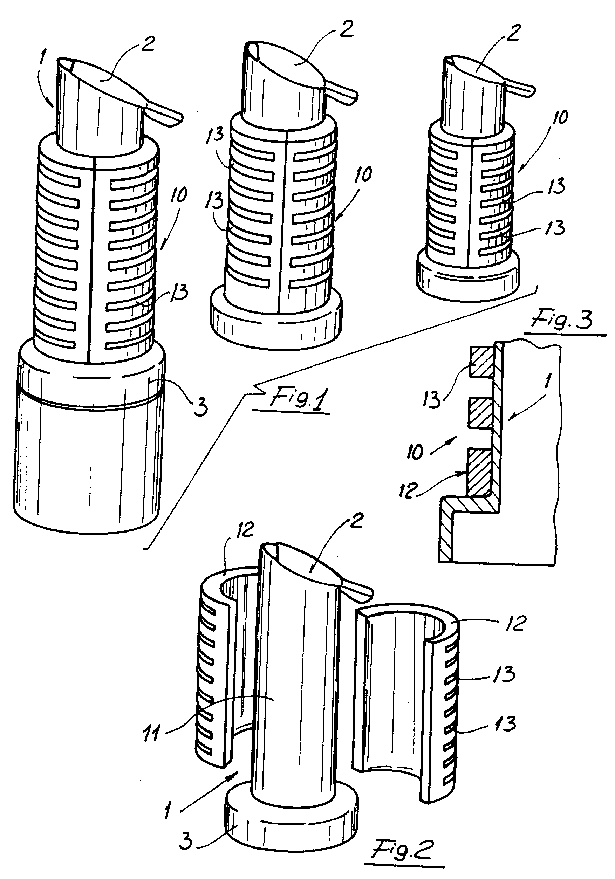

## DESCRIPTION OF THE PREFERRED EMBODIMENTS

With reference to the figures of the accompanying drawings, the improved structure, adapted to improve the handling characteristics of coffee-pots, tea-pots, and the like according to the invention, comprises a metal material holding or containing body, indicated overally at the reference number 1, which, preferably, but not necessarily, has a cylindrical shape and is closed at the top thereof by a cover member 2 pivoted on the top edge of the body 1.

At its lower portion, the containing body 1 is provided with an enlarged portion 3, also having a substantially cylindrical shape, which represents an extension of the line of the base vessel, in the coffee-pot, whereas, in the tea-pot or milk-pot, this enlarged portion 3 acts by itself as a base element, since this portion is made by using a single mold.

A main feature of the invention is that there is provided a handle element, indicated overally at the reference number 10, which is applied at a zone 11 having a less diameter than that of the base 3 and overlaying the bottom portion or base 3.

Said handle element is made of a thermally insulating material and is so arranged as to completely encompass the reduced diameter zone 11.

According to a preferred embodiment, the handle element 10 consists of two half-shells 12, of semicylindrical shape, which can be mutually clamped at their vertical generatrix lines by means of screws or the like.

Moreover, each half-shell 12 is made by a plurality of semicircular portions 13 which are spaced by a gap adapted to prevent the user fingers from passing through.

Thus, the handle element 10 defines a broad gripping zone, in order to handle the vessel, and, moreover, has a well balanced weight with respect to the user hand thereby further improving the handling characteristics of the coffee-pot and the like.

As shown, the half-shells 12 have a radial thickness which has been specifically designed in order to prevent said half-shells 12 from protecting from the base or bottom portion 3 and, therefore, they are not affected directly by the heat during the heating operation of the coffee-pot.

This fact is very important since it affords the possibility of always holding the handle element at a small temperature which is not dangerous for the user.

From the above it should be apparent that the invention fully achieves the intended task and objects.

In particularly, it is to be pointed out that the provision of a handle element completely encompassing the containing body provides the coffee-pot with very improved handling characteristics.

While the invention has been disclosed and illustrated with reference to a preferred embodiment thereof, it should be apparent that the disclosed embodiment is susceptible to many modifications and variations all of which will come within the scope of the appended claims.

## Claims

1. An improved structure, for coffee-pots, tea-pots and the like, having improved handling characteristics, characterized in that it comprises a metal material containing body (1) having at least and enlarged bottom portion (3), and that on the outside of said containing body, at a zone (11) above said bottom portion, there is provided a handle element (10) made of a thermally insulating material, said handle element encompassing said containing body so as not to project outwardly beyond the circumference of its bottom portion.

2. An improved structure, according to Claim 1, characterized in that said containing body (1) has a substantially cylindrical shape, with a reduced diameter zone (11) for applying said handle element (10).

3. An improved structure, according to Claim 1, characterized in that said handle element (10) consists of a mateable half-shell (12) pair.

4. An improved structure, according to Claim 3, characterized in that said half-shells (12) have a substantially semicylindrical shape, and can be clamped to one another at their vertical generatrix lines by screw coupling means.

5. An improved structure, according to Claim 3, characterized in that each said half-shell (12) consists of a plurality of semicircular portions (13) spaced from one another in the axial direction.

6. An improved structure, according to any of the preceding claims, characterized in that said containing body (1) is made by using a single mold.

## Patentansprüche

1. Verbesserte Konstruktion für Kaffeekannen, Teekannen und dergleichen, mit verbesserter Handlichkeit, dadurch gekennzeichnet, dass sie mit einem metallischen Behälterkörper (1) versehen ist, der wenigstens eine aufweitete Bodenportion (3) weist auf, und dass, auf die äussere Fläche des Behälterskörpers, in einem Bereich (11) oben der obengenannten Bodenportion, ein Handgriffelement (10) aus Wärmeisolierungsmaterial vorgesehen ist, wobei dieses Handgriffelement, um nicht aus dem äusseren Umfang seiner Bodenportion hervorzuragen, den obengenannte Behälterkörper umfasst.

2. Verbesserte Konstruktion, nach Anspruch 1, dadurch gekennzeichnet, dass dieser Behälterkörper (1) wesentlich zylinderförmig ist, und eine Portion (11) beschrenktes Durchmessers zur Anbringung des obengenannten Handgriffelementes (10) weist auf.

3. Verbesserte Konstruktion, nach Anspruch 1, dadurch gekennzeichnet, dass das obengenannte Handgriffelement (10) aus einem Paar zusammenpassenden Halbschalen (12) besteht.

4. Verbesserte Konstruktion, nach Anspruch 3, dadurch gekennzeichnet, dass die obengenannten Halbschalen (12) wesentlich halbzylinderförmig sind und längs ihren vertikalen Erzeugende durch Schraubenkupplungen zusammengeschraubt werden können.

5. Verbesserte Konstruktion, nach Anspruch 3, dadurch gekennzeichnet, dass jede Halbschale (12) aus mehreren in ihren Axialrichtung aneinandergetrennten halbzylindrischen Portionen (13) besteht.

6. Verbesserte Konstruktion, nach irgendeinem vorhergehenden Anspruch, dadurch gekennzeichnet, dass das obengenannte Behälterkörper (1) durch Einwendung eines einigen Gesenks erzeugt wird.

## Revendications

1. Structure perfectionnée pour cafetières, théières et similaires présentant des caractéristiques de manipulation perfectionnées, caractérisée en ce qu'elle comprend un corps récipient (1) fait d'un matériel métallique, présentant au moins une portion (3) de base allargée, et en ce que à l'extérieur dudit corps récipient (1), dans une région (11) au-dessus de ladite portion de base, il y a prévu un élément poignée (10) fait d'un matériel d'insulation thermique, ledit élément poignée embrassant ledit corps récipient de façon de ne saillir pas hors du périmètre de sa portion de base.

2. Structure perfectionnée, selon la revendication 1, caractérisée en ce que ledit corps récipient (1) présente une forme essentiellement cylindrique, avec une région (11) d'un diamètre réduit pour y appliquer ledit élément poignée (10).

3. Structure perfectionnée, selon la revendication 1, caractérisée en ce que ledit élément poignée (10) consiste d'un pair de demi-coquilles (12) qui peuvent être jointes.

4. Structure perfectionnée, selon la revendication 3, caractérisée en ce que lesdites demi-coquilles (12) présentent une forme essentiellement sémi-cylindrique et peuvent être serrées l'une l'autre le long de leurs génératrices verticales au moyen d'éléments d'accouplement à vis.

5. Structure perfectionnée, selon la revendication 3, caractérisée en ce que chacune desdites demi-coquilles (12) consiste d'une pluralité de portions sémi-circulaires (13) qui sont écartées l'une l'autre dans leur sens axial.

6. Structure perfectionnée, selon une revendication précédente quelconque, caractérisée en ce que ledit corps récipient (1) est fabriqué en employant une étampe unique.

Fig.1

Fig.2

Fig.3